# EUROPEAN PATENT APPLICATION

(11) **EP 3 528 180 A1**
(43) Date of publication of application: **21.08.2019**
(21) Application number: 19153184.7
(22) Date of filing: 23.01.2019
(51) Int. Cl.: G06N 3/04, G06N 3/08, G06N 5/02

(54) **METHOD, SYSTEM AND TERMINAL FOR NORMALIZINGENTITIES IN A KNOWLEDGE BASE, AND COMPUTER READABLE STORAGE MEDIUM**

(30) Priority: 25.01.2018 CN 201810073982
(71) Applicant: Beijing Baidu Netcom Science And Technology Co., Ltd., Beijing 100085 (CN)
(72) Inventor: FENG, Zhifan, BEIJING, 100085 (CN); LU, Chao, BEIJING, 100085 (CN); XU, Ye, BEIJING, 100085 (CN); FANG, Zhou, BEIJING, 100085 (CN); ZHU, Yong, BEIJING, 100085 (CN); LI, Ying, BEIJING, 100085 (CN)
(74) Representative: Lavoix

(57) **Abstract**

A method, a system and a terminal for normalizing entities in a knowledge base, and a computer readable storage medium. The method includes: acquiring a set of entities in the knowledge base; pre-segmenting the set of entities in a plurality of segmenting modes; performing a sample construction based on the result of pre-segmentation, in order to extract a key sample; performing a feature construction based on the result of pre-segmentation, in order to extract a similar feature; performing a normalizing determination on each pair of entities by means of at least one normalization model in combination with the key sample and the similar feature, in order to determine whether entities in each pair are the same; and grouping results of the normalizing determination.

## Description

The present application claims the benefit of priority to Chinese Patent Application No. 201810073982.5, filed before the State Intellectual Property Office on January 25, 2018, and entitled "Method, System and Terminal for normalizing Entities in a Knowledge Base, and Computer Readable Storage Medium", which is incorporated in the present application by reference in its entirety.

### TECHNICAL FIELD

The present disclosure relates to the technical field of database construction, and in particular to a method, a system and a terminal for normalizing entities in a large-scale open domain based on a knowledge base, and a computer readable storage medium.

### BACKGROUND

Knowledge base construction is very complicated and difficult. Hence, existing methods are only used in a small-scale and single-vertical type knowledge base (including million to ten-million entities). However, the problem of large-scale entity normalizing cannot be efficiently solved for a large-scale knowledge base (including hundred-million entities). On the other hand, due to large differences between data of the entities, a simple normalizing method can neither solve all the problems in the group, nor support various attributes, categories, and problem scenes in a uniform and efficient manner. Therefore, in the existing methods, entities in the knowledge base are processed in a particular way, that is, an entity with thin attribute information is directly filtered out and not processed, and related processing is further performed on the quality of the entity information.

The above information disclosed in the background is only for understanding of the background of the present disclosure. Therefore, it may contain information that does not constitute the related art known to those skilled in the art.

### SUMMARY

A method, a system and a terminal for normalizing entities in a knowledge base, and a computer readable storage medium are provided according to embodiments of the present disclosure, so as to solve at least the above technical problems in the related art.

In a first aspect, a method for normalizing entities in a knowledge base is provided according to an embodiment of the present disclosure. The method includes:
acquiring a set of entities in the knowledge base;
pre-segmenting the set of entities in a plurality of segmenting modes;
performing a sample construction based on the result of pre-segmentation, in order to extract a key sample;
performing a feature construction based on the result of pre-segmentation, in order to extract a similar feature;
performing a normalizing determination on each pair of entities by means of at least one normalization model in combination with the key sample and the similar feature, in order to determine whether entities in each pair are the same; and
grouping results of the normalizing determination .

In combination with the first aspect, in a first embodiment of the first aspect of the present disclosure, the plurality of segmenting modes comprise at least first and second segmenting modes;
pre-segmenting the set of entities comprises
segmenting, in the first segmenting mode, the set of entities ; and
re-segmenting, in the second segmenting mode, the results of segmenting in the first segmenting mode.

In combination with the first aspect, in a second embodiment of the first aspect of the present disclosure, the performing the sample construction includes performing a first key sample construction based on attribute; and performing a second key sample construction based on an active learning algorithm .

In combination with the second embodiment of the first aspect, in a third embodiment of the first aspect of the present disclosure, performing a first key sample construction includes the following steps:
extracting key attributes of each of the entity pairs in the results of pre-segmentation; and according to the extracted key attributes, generating a plurality of new entity pairs by re-segmenting and clustering the entities; and
labeling part of the new entity pairs that randomly selected, to obtain and output the first key sample .

In combination with the second embodiment of the first aspect, in a fourth embodiment of the first aspect of the present disclosure, the performing a second key sample construction includes the following steps:
step 1): labeling part of the plurality of entity pairs in the results of pre-segmentation, to form a labeled sample set and an unlabeled sample set comprising those unlabeled;
step 2): constructing a classification model based on the labeled sample set;
step 3): inputting the unlabeled entity pairs into the classification model for scoring, and according to the results of scoring, extracting the entity pairs with a boundary score;
step 4): according to an active learning algorithm, selecting, as a key sample, part of the entity pairs with the boundary score for labeling, and adding the labeled sample to the labeled sample set to obtain a new labeled sample set based on which the classification model being re-trained; and
repeating step 3) and step 4) until the classification model converges, and outputting the labeled sample set obtained by the converged classification model, as the second key sample set.

In combination with the first aspect, in a fifth embodiment of the first aspect of the present disclosure, the performing a feature construction includes the following step:

calculating, with a plurality of feature constructing policies, each of the entity pairs according to the result of pre-segmenting, and outputting result of the calculation as the similar feature.

In combination with the first aspect, in a sixth embodiment of the first aspect of the present disclosure, in a case of a plurality of normalization models, performing, by each of the plurality of normalization models, normalizing determination on each of the entity pairs according to the result of pre-segmenting, and outputting results of the grouping results of normalizing determinations respectively; generating a final result of the normalizing determination by fusing each one of the results for normalizing determinations.

In a second aspect, a system for normalizing entities in a knowledge base is provided according to an embodiment of the present disclosure. The system includes:
an acquiring module, configured for acquiring a set of entities in the knowledge base ;
a segmenting module, configured for pre-segmenting the set of entities in a plurality of segmenting modes ;
a sample constructing module, configured for performing a sample construction based on the result of pre-segmentation, in order to extract a key sample;
a feature constructing module, configured for performing a feature construction based on the result of pre-segmentation, in order to extract a similar feature;
a normalizing determination module, configured for performing a normalizing determination on each pair of entities by means of at least one normalization model in combination with the key sample and the similar feature, in order to determine whether entities in each pair are the same; and
a grouping module, configured for grouping results of the normalizing determination.

In a possible design, the sample constructing module includes a first sample constructing module and a second sample constructing module.

In a possible design, the first sample constructing module further includes:
a key attribute sub-module configured for extracting key attributes of each of the entity pairs in the results of pre-segmentation; and according to the extracted key attributes, generating a plurality of new entity pairs by re-segmenting and clustering the entities; and
a first outputting sub-module configured for labeling part of the new entity pairs that randomly selected, to obtain and output the first key sample .

In a possible design, the second sample constructing module includes:
a sample sub-module, configured for labeling part of the plurality of entity pairs in the results of pre-segmentation, to form a labeled sample set and an unlabeled sample set comprising those unlabeled;
a modeling sub-module, configured for constructing a classification model based on the labeled sample set;
a calculating sub-module, configured for inputting the unlabeled entity pairs into the classification model for scoring, and according to the results of scoring, extracting the entity pairs with a boundary score;
an iteration sub-module, configured for, according to an active learning algorithm, selecting, as a key sample, part of the entity pairs with the boundary score for labeling, and adding the labeled sample to the labeled sample set to obtain a new labeled sample set based on which the classification model being re-trained; and
a second outputting sub-module configured for, in a case that the classification model converges, determining the labeled sample set obtained by the converged classification model as the second key sample set and outputting the second key sample set.

In a third aspect, a terminal for normalizing entities in a knowledge base is provided according to an embodiment of the present disclosure. The terminal includes:
one or more processors; and
a storage device, configured to store one or more programs;
when the one or more programs are executed by the one or more processors, the one or more processors implements any of the methods included in the first aspect.

In a fourth aspect, an embodiment of the present disclosure provides a computer readable storage medium having a computer program stored thereon that, when executed by a processor, implements any of the methods included in the first aspect.

One of the above described technical solutions has the following advantages or advantageous effects. 1: with the method according to the present disclosure, a knowledge base of a scale of a hundred million level can be processed, and a multi-vertical type mixed knowledge base can be processed in a unified manner. The knowledge base may include entities with various qualities, which can be processed by the normalizing system using a unified strategy; 2: a large-scale entity set is segmented by using a plurality of segmenting modes in advance for a massive knowledge base, so that the entities to be normalized can be segmented into the same group as much as possible and the number of the entities to be normalized is reduced, thereby breaking through the limits of calculation scale, reducing the calculation amount, while also improving a recall of normalizing; 3: with the multi-model fusion scheme, the problem of supporting multiple-entity data in different scenes and models is solved. In addition, a sample construction is achieved by adopting large-scale key sample construction and human-machine cooperation.

The above summary is provided only for illustration, and is not intended to limit the disclosure in any way. In addition to the illustrative aspects, embodiments and features described above, further aspects, embodiments and features of the present disclosure may be readily understood from the following detailed description with reference to the accompanying drawings.

### BRIEF DESCRIPTION OF THE DRAWINGS

Unless otherwise specified, identical or similar parts or elements are denoted by identical reference signs throughout several figures of the accompanying drawings. The drawings are not necessarily drawn to scale. It should be understood that these drawings merely illustrate some embodiments of the present disclosure, and should not be construed as limiting the scope of the disclosure.
FIG.1 is a flowchart of a method for normalizing entities in a knowledge base according to an embodiment of the present disclosure;
FIG.2 is a schematic diagram showing a sample construction process according to an embodiment of the present disclosure;
FIG.3 is a specific schematic flowchart of a method for normalizing entities in a knowledge base according to an embodiment of the present disclosure;
FIG.4 is a schematic structural diagram of a system for normalizing entities in a knowledge base according to an embodiment of the present disclosure; and
FIG.5 is a schematic structural diagram of a terminal for normalizing entities in a knowledge base according to an embodiment of the present disclosure.

### DETAILED DESCRIPTION

Hereinafter, only some exemplary embodiments are simply described. As can be recognized by those skilled in the art, the described embodiments may be modified in various different ways without departing from the spirit or scope of the present disclosure. Accordingly, the drawings and the description should be considered as illustrative in nature instead of being restrictive.

### Embodiment 1

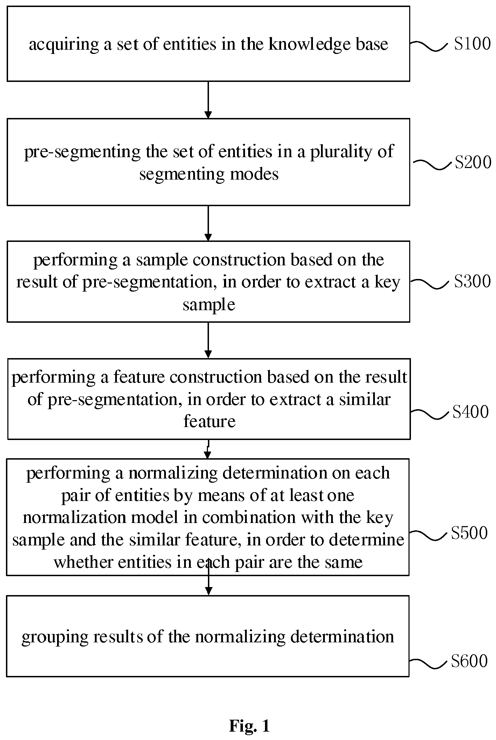

A method for normalizing entities in a knowledge base is provided according to an embodiment of the present disclosure. As shown in FIG.1, the method mainly includes steps S100 to S600.

Step S100, acquiring a set of entities in the knowledge base.

The knowledge base may be a knowledge base of a million scale, a ten-million scale or a hundreds-of-million scale. The above knowledge bases of different scales may be a Chinese knowledge graph, or a mixed knowledge base of single-vertical type or multi-vertical type.

Step S200, pre-segmenting the set of entities in a plurality of segmenting modes.

It should be noted that, a plurality of segmenting modes, in particular two or more segmenting modes may be applied. In the segmenting in advance, the entities are segmented into a plurality of groups (or a plurality of partitions), and each group includes a plurality of entity pairs in which two entities seemingly indicate a same object. In the segmenting with a plurality of segmenting modes, a plurality of groups obtained by a segmenting mode is re-segmented by another segmenting mode. In this way, entities seemingly indicating the same object may be grouped into the same group as much as possible by considering logics of the plurality of segmenting modes. Hence, the number of entity pairs to be normalized in a subsequent entity normalizing determination step is reduced, the calculation amount is reduced. Even for a large-scale knowledge base with hundred-of-million entities, the breakthrough on calculation scale can be obtained, and the calculation amount of a normalization model is greatly reduced.

In an embodiment, in a case that the plurality of segmenting modes includes a first segmenting mode and a second segmenting mode, in the segmenting, the entities are segmented for a first time by the first segmenting mode to obtain a plurality of first entity groups, and then the plurality of groups obtained by the first segmenting mode is re-segmented by the second segmenting mode to obtain a plurality of second entity groups. As such, the obtained segmenting results are improved again and again.

Step S300, performing a sample construction based on the result of pre-segmentation, in order to extract a key sample.

The step S300 may be performed with any one of existing ways, which is not limited to the ways exemplified in the embodiments of the present disclosure.

Step S400, performing a feature construction based on the result of pre-segmentation, in order to extract a similar feature.

The step S400 is performed with any one of existing ways, which is not limited to the ways exemplified in the embodiments of the present disclosure.

Step S500, performing a normalizing determination on each pair of entities by means of at least one normalization model in combination with the key sample and the similar feature, in order to determine whether entities in each pair are the same.

It should be noted that, there may be a plurality of key samples and a plurality of similar features so that a normalizing determination result obtained by the normalization model is further improved. By the segmenting, the entities are segmented into a plurality of groups, each group including a plurality of entity pairs. In the normalizing determination, the normalizing determination is performed on the plurality of entity pairs in each of the groups. It should be understood that, an entity pair includes two entities. Therefore, the normalizing determination is performed to the two entities to determine whether the two entities are the same, that is, indicate the same object.

Step S600, grouping results of the normalizing determination.

In Embodiment 1, the segmenting mode maybe a schema-based segmenting mode, a segmenting mode based on a semantic edge relationship and segmenting mode based on semantic vector clustering. The entities may be segmented with any two or all of the three segmenting modes. The order for performing the segmenting with the three segmenting modes may be determined or changed as required. That is, any one of the segmenting modes may be taken as a first segmenting mode to segment the entities, and any one of the segmenting modes which has not been used may be taken as the last-used segmenting mode.

In the schema-based segmenting mode, a key attribute (or N-Gram, a Chinese language model) of each entity is obtained mainly based on exploration logs, and serves as a criteria of the segmenting.

In Embodiment 1, the key attribute may be considered to be the name or alias of an article, the gender, age or body type of a person, the year, country, male and female leading role, or the type of a film, and the like. The above key attributes are only examples. In practical applications, the key attribute in the schema-based segmenting mode according to the present disclosure are not limited to the above examples, and may be arbitrarily selected as required.

In the segmenting mode based on asemantic edge relationship, the semantic edge relationship (a strategy for establishing a semantic edge relationship is called edge establishment) between entities is used. Generally, entities having a semantic edge relationship with a large number of entities may indicate the same object. For example, if two entities, the Chinese People's Liberation Army General Hospital and the 301 Hospital, both have a semantic edge relationship with four doctors A, B, C and D, the two entities may be considered to indicate the same object. It should be noted that, the segmenting mode based on a semantic edge relationship is mainly used for segmenting the entities. Therefore, the segmenting result obtained in this mode may not be correct, and the obtained result is required to be further determined in combination with other segmenting modes.

In the segmenting mode based on semantic vector clustering, firstly, by a Deep Neural Network (DNN) technology, an entity is vectorized according to semantic information of the entity and co-occurrence information of the entity. The obtained entity vector can characterize semantic information of the entity (such as semantics described by the entity and semantics of an entity attribute, etc.), and a relationship between two entities (for example, a "couple relationship" between entities "Andy Lau" and "liqian ZHU"). According to the semantic information in combination with a clustering technology, entities that may indicate the same object can be segmented into the same one group. If a segmenting is performed based on the clustering result, the semantic generalization can be achieved.

In Embodiment 1, the performing a sample construction includes performing a key sample construction based on attribute ;and performing a second key sample construction based on an active learning algorithm.

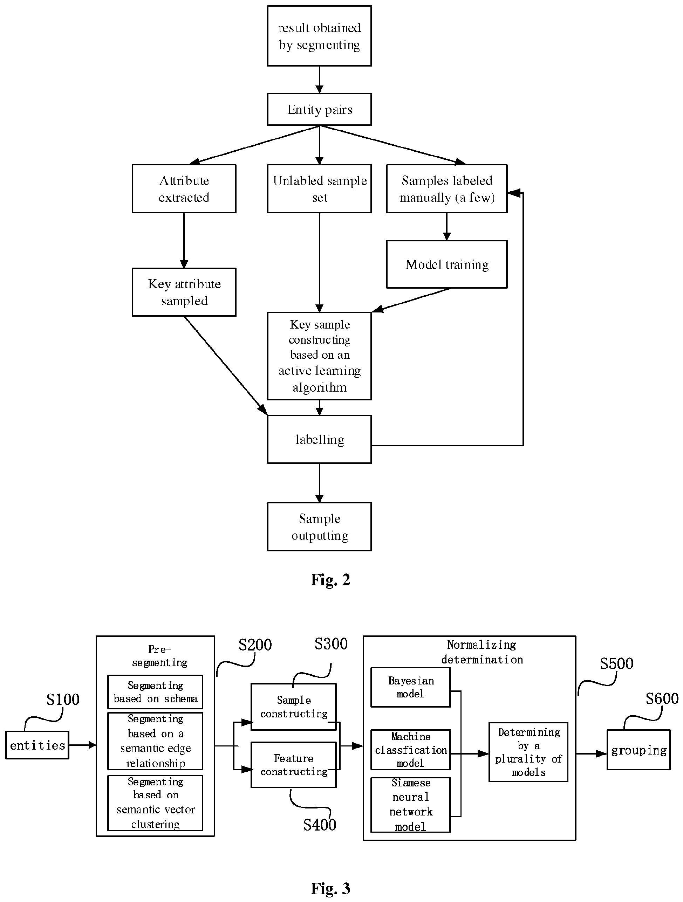

In Embodiment 1, as shown in FIG.2, performing a first key sample construction includes:
extracting key attributes of each of the entity pairs in the results of pre-segmentation; and according to the extracted key attributes, generating a plurality of new entity pairs by re-segmenting and clustering the entities; and
labeling part of the new entity pairs that randomly selected, to obtain and output the first key sample .

It should be noted that, the entity pair may be labeled manually, and a labeling mode by an expert or a crowdsourcing labeling mode may be selected according to a labeling cost. In a case that the knowledge base is of a hundred-million scale, a large amount first key samples are required to be collected for the normalizing determination and grouping.

In a preferred embodiment, a commonly used attribute of a certain type of entities that is obtained via searching logs is determined to be a key attribute for extracting. For example, for a film-type entity, commonly used attributes may be film name, actor, director, releasing date and releasing country or the like.

In Embodiment 1, as shown in FIG.2, the performing a second key sample construction includes steps 1) to 4).
step 1), labeling part of the plurality of entity pairs in the results of pre-segmentation, to form a labeled sample set and an unlabeled sample set comprising those unlabeled.

In step 2), constructing a classification model based on the labeled sample set. The classification model may be a Gradient Boosting (XGBoost) model.
step 3), inputting the unlabeled entity pairs into the classification model for scoring, and according to the results of scoring, extracting the entity pairs with a boundary score. The threshold score may be about 0.5, or, in a range from 40% to 60% which means that a probability that the two entities indicate the same object is 40%-60%. Therefore, it is difficult to accurately calculate whether the entities in the entity pair indicate the same object by the existing methods.
step 4), according to an active learning algorithm, selecting, as a key sample, part of the entity pairs with the boundary score for labeling, and adding the labeled sample to the labeled sample set to obtain a new labeled sample set based on which the classification model being re-trained.

It should be noted that, in a case that there are too many entity pairs with the threshold score, a certain number of the entity pairs with the threshold score are selected according to a search criteria and then labeled. The labeling may be expert labeling or crowdsourcing labeling. Since an entity pair that cannot be determined with the scoring model are labeled, by training, the classification model can be optimized and improved, that is, it is possible to determine whether the entities of the selected entity pair with the threshold score indicate the same object.

In order to further improve the classification model, step 3) and step 4) may be performed repeatedly until the classification model converges. That is, when the unlabeled sample set can be accurately determined and a result obtained by the classification model and efficiency of the classification model can meet a preset standard, iteration on the classification model is ended. The labeled sample set obtained after the iteration is output as a second key sample set.

In Embodiment 1, the active learning algorithm may include algorithm based on a maximizing information amount, expected error reduction algorithm (least expected error algorithm) or minimum version space algorithm (minimum interpretation space algorithm).

In the algorithm based on the maximized information amount, an unlabeled entity pair that may cause the current model to change a lot potentially (i.e., containing much information), i.e.an entity with a preset threshold are selected and labeled. In the algorithm based on the maximized information amount, an entity pair that is most difficult to be determined is selected, and thus, the algorithm is called an uncertainty sampling algorithm.

In the expected error reduction algorithm, by considering from a global perspective, an entity pair with the least expected error (risk) is labeled. The essential process of this algorithm is to calculate an expectance of a global error after an entity pair is added to the labeled sample set.

In the minimum version space algorithm, all of the statistical learning models that are consistent with a labeled entity set are referred to as aversion space of the entity set. The larger the version space is, the more the models therein can be selected. In a case that the version space has only one element, the statistical learning model can also be uniquely determined. Therefore, in another active learning algorithm, an entity pair enabling to minimize the version space is selected and labeled.

In Embodiment 1, the performing a feature construction includes: calculating, with a plurality of feature constructing policies, each of the entity pairs according to the result of pre-segmenting, and outputting result of the calculation as the similar feature.

It should be noted that, a plurality of feature construction policies may be applied, which include two or more feature construction policies. It is understood that applying the plurality of feature construction policies may include performing calculation on the entity pairs by any one of the policies, and then performing calculating on a result, obtained by performing the feature construction policy, by another feature construction policy, so as to obtain a more accurate similar feature.

In a specific implementation, the plurality of feature construction policies include a first feature construction policy and a second feature construction policy. The entity pairs obtained by the segmenting are calculated with the first feature construction policy firstly to obtain a first calculating result. Then, the first calculating result is calculated with the second feature construction policy to obtain a second calculating result, i.e. the similar feature, so as to improve obtained similar feature.

In a preferred embodiment, the feature construction policy includes: a textual similar feature, a textual semantic feature, and a structural semantic feature.

The textual similar feature includes text co-occurrence, key phrase (phrase) co-occurrence, attribute value overlapping, and the like.

The text semantic features are mainly similar features of a semantic level, including a text semantic similarity, a key phrase semantic similarity, and a key attribute value semantic similarity, and the like.

The structural semantic features mainly refer to similar features of a map structure formed by connecting entities. For example, the entity "Liu dehua" has many attribute edges, such as "wife: Zhu liqian", "daughter: Liu xianghui" and "works: Infernal Affairs, A World Without Thieves, Running Out of Time", and other edge relationships formed by extending these attribute edges. In this case, an entity normalizing determination can be performed by taking the similarity of these semantic edges as a feature.

In the above three feature construction policies, the similar features are all calculated with comparison operators. The comparison operator includes a large quantity of attribute similarity calculation plugins, which can also be customized by a user.

Based on the first embodiment, the normalizing model may be a Bayesian inference model, a machine learning classification model, or a normalizing model based on a Siamese neural network model.

In the Bayesian inference model, attribute importance and comparison modes are configured by a user based on the key sample and the similar feature, and then the normalizing determination is performed based on a Bayesian inference formula. The principle of the Bayesian inference model is to calculate the entity similarity based on a prior probability of attribute comparison. The model is mainly implemented in a plugin "bayes.comparer" in which an initial probability is 0.5, and is gradually modified with a probability obtained in the attribute similarity calculation.

In the machine learning classification model, the normalizing determination can be considered to be the classifying in machine learning by a classifying model that is trained based on the key sample and the similar feature. That is, it is determined by the classifying model whether two given entities indicate the same object. The XGBoost model is adopted as the classifying model, and a GridSearch is adopted for automatic parameter searching. The normalizing determination based on the Bayesian inference mainly solves a problem requiring quick effect. A high-accuracy normalizing determination policy can be manually generated quickly in a semi-self-help mode for supporting an application.

In the normalizing determination model based on the Siamese neural network, the model based on machine learning classification strongly depends on a construction of a feature system, and the quality of the feature construction may affect the effect of the model to a large extent. Based on accumulated large batches of effective training samples (samples in the key sample set and the key feature set), the DNN technology can automatically perform an encoding and learning on the key features using a large quantity of the training samples. The normalizing determination based on the machine learning classification model can be used for manually constructing the key features and the training samples, and can complete a medium/high-accuracy normalizing model within one to three days, and put the normalizing model into an application.

The normalizing determination of two entities to indicate the same object can be handled by adopting a Siamese peer-to-peer network structure. A framework of the structure mainly includes three parts: an input layer construction, a network structure layer, and a loss function using a standard comparison operator. For the input layer construction, inputs include attribute information (each attribute and the value thereof are input directly) of two entities for the normalizing determination and original features in the machine learning classification. The network structure layer includes a Convolutional Neural Network (CNN) and a maximum pooling layer which are connected to a Long Short-Term Memory (LSTM) layer.

In a preferred embodiment, if a plurality of normalizing models are used, it is determined whether two entities of each entity pair in the pre-segmenting result indicate a same object by each normalizing model; and outputting results of the grouping results of normalizing determinations respectively; and the grouping results of the normalizing determination includes: generating a final result of the normalizing determination by fusing each one of the results for normalizing determinations.

Based on the first embodiment, the grouping results of the normalizing determination is based on the results of the normalizing determination and performed using a Union-Find algorithm, so as to obtain an entity set. After the performing the grouping, the entity set is input into the knowledge base to normalize and disambiguate information in the knowledge base.

In a case where a new entity set comprising a plurality of entities is input into the knowledge base, the normalizing determination and grouping may be performed on the new entity set by the above method according to the present disclosure. In addition, after the obtained entity set is input into the knowledge base, it is required to fuse related entities. For example, two entities indicating the same object and with a few pieces of different information therein are fused. For example, entities "Liudehua" and "Huazai" substantively represent the same person, i.e., indicate the same object, although they have different names.

Based on the Embodiment 1, as shown in FIG. 3, the method for normalizing entities in a knowledge base includes:
S100: acquiring a set of entities in the knowledge base ;
S200: pre-segmenting the set of entities using three segmenting modes; wherein the three segmenting modes include a schema-based segmenting mode, a segmenting mode based on a semantic edge relationship and a segmenting mode based on semantic vector clustering;
S300: performing a sample construction based on the result of pre-segmentation, in order to extract a key sample;
S400: performing a feature construction based on the result of pre-segmentation, in order to extract a similar feature;
S500: performing a normalizing determination on each pair of entities by means of three normalizing models, in order to determine whether entities in each pair are the same, wherein the three normalizing models include a Bayesian inference model, a machine learning classification model, or a grouping model based on a Siamese neural network model; and
S600: generating a final result of the normalizing determination by fusing each one of the results for normalizing determinations according to a fusion strategy by a voting manner, to group results of the normalizing determination.

### Embodiment 2

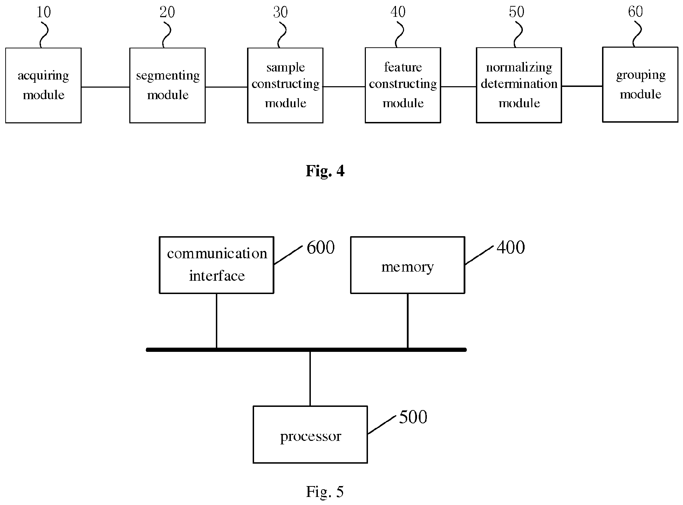

A system for normalizing entities in a knowledge base is provided according to an embodiment of the present disclosure. As shown in FIG. 4, the system includes:
an acquiring module 10, configured for acquiring a set of entities in the knowledge base;
a segmenting module 20, configured for pre-segmenting the set of entities in a plurality of segmenting modes;
a sample constructing module 30, configured for performing a sample construction based on the result of pre-segmentation, in order to extract a key sample;
a feature constructing module 40, configured for performing a feature construction based on the result of pre-segmentation, in order to extract a similar feature;
a normalizing determination module 50, configured for, performing a normalizing determination on each pair of entities by means of at least one normalization model in combination with the key sample and the similar feature, in order to determine whether entities in each pair are the same; and
a grouping module 60, configured for grouping results of the normalizing determination.

In a possible design, the sample constructing module 30 includes a first sample constructing module and a second sample constructing module.

In a possible design, the first sample constructing module includes:
a key attribute sub-module configured for extracting key attributes of each of the entity pairs in the results of pre-segmentation; and according to the extracted key attributes, generating a plurality of new entity pairs by re-segmenting and clustering the entities; and
a first outputting sub-module configured for labeling part of the new entity pairs that randomly selected, to obtain and output the first key sample.

In a possible design, the second sample constructing module includes:
a sample sub-module, configured for labeling part of the plurality of entity pairs in the results of pre-segmentation, to form a labeled sample set and an unlabeled sample set comprising those unlabeled;
a modeling sub-module, configured for constructing a classification model based on the labeled sample set;
a calculating sub-module, configured for inputting the unlabeled entity pairs into the classification model for scoring, and according to the results of scoring, extracting the entity pairs with a boundary score;
an iteration sub-module, configured for, according to an active learning algorithm, selecting, as a key sample, part of the entity pairs with the boundary score for labeling, and adding the labeled sample to the labeled sample set to obtain a new labeled sample set based on which the classification model being re-trained; and
a second outputting sub-module configured for, in a case that the classification model converges, determining the labeled sample set obtained by the converged classification model as the second key sample set and outputting the second key sample set.

### Embodiment 3

A terminal for normalizing entities in a knowledge base is provided according to an embodiment of the present disclosure. As shown in FIG. 5, the terminal includes:
a memory 400 and a processor 500, wherein a computer program that can run on the processor 500 is stored in the memory 400; when the processor 500 executes the computer program, the method for knowledge base entity normalization in the above embodiment is implemented.; the number the memory 400 and the processor 500 may each be one or more; and
a communication interface 600, configured to enable the memory 400 and the processor 500 to communicate with an external device.

The memory 400may include a high-speed RAM memory, or may also include a non-volatile memory, such as at least one disk memory.

If the memory 400, the processor 500 and the communication interface 600 are implemented independently, the memory 400, the processor 500 and the communication interface 600may be connected to each other via a bus so as to realize mutual communication. The bus may be an industry standard architecture (ISA) bus, a peripheral component interconnect (PCI) bus, an extended industry standard architecture (EISA) bus, or the like. The bus may be categorized into an address bus, a data bus, a control bus or the like. For ease of illustration, only one bold line is shown in FIG. 5 to represent the bus, but it does not mean that there is only one bus or only one type of bus.

Optionally, in a specific implementation, if the memory 400, the processor 500 and the communication interface 600 are integrated on one chip, then the memory 400, the processor 500 and the communication interface 600 can complete mutual communication through an internal interface.

### Embodiment 4

An embodiment of the present disclosure provides a computer readable storage medium having a computer program stored thereon that, when executed by a processor, implements the method for normalizing entities in a knowledge base as described in any of the above embodiments.

In the present specification, the description referring to the terms "one embodiment", "some embodiments", "an example", "a specific example", or "some examples" or the like means that the specific features, structures, materials, or characteristics described in connection with the embodiment or example are contained in at least one embodiment or example of the disclosure. Moreover, the specific features, structures, materials, or characteristics described may be combined in a suitable manner in any one or more embodiments or examples. In addition, various embodiments or examples described in the specification as well as features of different embodiments or examples may be united and combined by those skilled in the art, as long as they do not contradict with each other.

Furthermore, terms "first" and "second" are used for descriptive purposes only, and are not to be construed as indicating or implying relative importance or implicitly indicating the number of recited technical features. Thus, a feature defined with "first" and "second" may include at least one said feature, either explicitly or implicitly. In the description of the present disclosure, the meaning of "a plurality" is two or more than two, unless otherwise explicitly or specifically indicated.

Any process or method described in the flowcharts or described otherwise herein may be construed as representing a module, segment or portion including codes for executing one or more executable instructions for implementing a particular logical function or process steps. The scope of the preferred embodiments of the present disclosure includes additional implementations in which functions may be implemented in an order that is not shown or discussed, including in a substantially concurrent manner or in a reverse order based on the functions involved. All these should be understood by those skilled in the art to which the embodiments of the present disclosure belong.

The logics and/or steps represented in the flowchart or otherwise described herein for example may be considered as an ordered list of executable instructions for implementing logical functions. They can be specifically embodied in any computer-readable medium for use by an instruction execution system, apparatus or device (e.g., a computer-based system, a system including a processor, or another system that can obtain instructions from the instruction execution system, apparatus or device and execute these instructions) or for use in conjunction with the instruction execution system, apparatus or device. For the purposes of the present specification, "computer-readable medium" can be any means that can contain, store, communicate, propagate or transmit programs for use by an instruction execution system, apparatus or device or for use in conjunction with the instruction execution system, apparatus or device.

The computer-readable medium described in the embodiments of the disclosure may a computer-readable signal medium or a computer-readable storage medium or any combination of a computer-readable signal medium and a computer-readable storage medium. More specific examples (non-exhaustive list) of computer-readable storage medium at least include: electrical connection parts (electronic devices) having one or more wires, portable computer disk cartridges (magnetic devices), random access memory (RAM), read only memory (ROM), erasable programmable read-only memory (EPROM or flash memory), fiber optic devices, and portable read only memory (CDROM). In addition, the computer-readable storage medium may even be a paper or other suitable medium on which the programs can be printed. This is because for example the paper or other medium can be optically scanned, followed by editing, interpretation or, if necessary, other suitable ways of processing so as to obtain the programs electronically, which are then stored in a computer memory.

In an embodiment of the present disclosure, the computer-readable signal medium may include a data signal propagating in a baseband or as a part of a carrier, in which computer-readable program codes are carried. Such propagating data signal can take a variety of forms including, but not limited to, electromagnetic signals, optical signals, or any suitable combination of the electromagnetic signals and optical signals. The computer-readable signal medium may also be any computer-readable medium other than a computer-readable storage medium, and the computer-readable medium can send, propagate or transmit a program for use by an instruction execution system, an input method, or a device or for use in conjunction with an instruction execution system, an input method, or a device. The program codes embodied in the computer-readable medium can be transmitted by any suitable medium, including but not limited to: wireless, wire, optic cable, radio frequency (RF), etc., or any suitable combination of the foregoing.

It should be understood that individual portions of the present disclosure may be implemented in the form of hardware, software, firmware, or a combination thereof. In the above embodiments, a plurality of steps or methods may be implemented using software or firmware stored in a memory and executed by a suitable instruction execution system. For example, if they are implemented in hardware, as in another embodiment, any one or a combination of the following techniques known in the art may be used: discrete logic circuits having logic gate circuits for implementing logic functions on data signals, application-specific integrated circuits having suitable combined logic gate circuits, programmable gate arrays (PGA), field programmable gate arrays (FPGA), etc.

Those skilled in the art may understand that all or part of the steps carried in the method of the foregoing embodiments may be implemented by using a program to instruct the relevant hardware, and the program may be stored in a computer-readable storage medium. When executed, the program includes one or a combination of the steps in the method embodiments.

In addition, individual functional units in various embodiments of the present disclosure may be integrated in one processing module, or individual units may also exist physically and independently, or two or more units may also be integrated in one module. The above integrated module can be implemented in the form of hardware or in the form of a software functional module. The integrated module may also be stored in a computer-readable storage medium if it is implemented in the form of a software functional module and sold or used as a stand-alone product. The storage medium may be a read-only memory, a magnetic disk or an optical disk, etc.

The above description only relates to specific embodiments of the present disclosure, but the scope of protection of the present disclosure is not limited thereto, and any of those skilled in the art can readily contemplate various changes or replacements within the technical scope of the present disclosure. All these changes or replacements should be covered by the scope of protection of the present disclosure. Therefore, the scope of protection of the present disclosure should be determined by the scope of the appended claims.

## Claims

1. A method for normalizing entities in a knowledge base, comprising:
acquiring a set of entities in the knowledge base;
pre-segmenting the set of entities in a plurality of segmenting modes;
performing a sample construction based on the result of pre-segmentation, in order to extract a key sample;
performing a feature construction based on the result of pre-segmentation, in order to extract a similar feature;
performing a normalizing determination on each pair of entities by means of at least one normalization model in combination with the key sample and the similar feature, in order to determine whether entities in each pair are the same; and
grouping results of the normalizing determination.

2. The method of claim 1, wherein the plurality of segmenting modes comprise at least first and second segmenting modes;
pre-segmenting the set of entities comprises:
segmenting, in the first segmenting mode, the set of entities; and
re-segmenting, in the second segmenting mode, the results of segmenting in the first segmenting mode.

3. The method of claim 1, wherein performing the sample construction comprises:
performing a first key sample construction based on attribute; and
performing a second key sample construction based on an active learning algorithm.

4. The method of claim 3, wherein the performing a first key sample construction comprises:
extracting key attributes of each of the entity pairs in the results of pre-segmentation; and according to the extracted key attributes, generating a plurality of new entity pairs by re-segmenting and clustering the entities; and
labeling part of the new entity pairs that randomly selected, to obtain and output the first key sample.

5. The method of claim 3, wherein the performing a second key sample construction comprises:
step 1):labeling part of the plurality of entity pairs in the results of pre-segmentation, to form a labeled sample set and an unlabeled sample set comprising those unlabeled;
step 2): constructing a classification model based on the labeled sample set;
step 3): inputting the unlabeled entity pairs into the classification model for scoring, and according to the results of scoring, extracting the entity pairs with a boundary score;
step 4): according to an active learning algorithm, selecting, as a key sample, part of the entity pairs with the boundary score for labeling, and adding the labeled sample to the labeled sample set to obtain a new labeled sample set based on which the classification model being re-trained; and
repeating step 3) and step 4) until the classification model converges, and outputting the labeled sample set obtained by the converged classification model, as the second key sample set.

6. The method of claim 1, wherein the performing a feature construction comprises:
calculating, with a plurality of feature constructing policies, each of the entity pairs according to the result of pre-segmenting, and outputting result of the calculation as the similar feature.

7. The method of claim 1, wherein in a case of a plurality of normalization models,
performing, by each of the plurality of normalization models, normalizing determination on each of the entity pairs according to the result of pre-segmenting, and outputting results of the grouping results of normalizing determinations respectively;
generating a final result of the normalizing determination by fusing each one of the results for normalizing determinations.

8. A system for normalizing entities in a knowledge base, comprising:
an acquiring module, configured for acquiring a set of entities in the knowledge base;
a segmenting module, configured for pre-segmenting the set of entities in a plurality of segmenting modes;
a sample constructing module, configured for performing a sample construction based on the result of pre-segmentation, in order to extract a key sample;
a feature constructing module, configured for performing a feature construction based on the result of pre-segmentation, in order to extract a similar feature;
a normalizing determination module, configured for performing a normalizing determination on each pair of entities by means of at least one normalization model in combination with the key sample and the similar feature, in order to determine whether entities in each pair are the same; and
a grouping module, configured for grouping results of the normalizing determination.

9. The system of claim 8, wherein the sample constructing module comprises a first sample constructing module and a second sample constructing module.

10. The system of claim 9, wherein the first sample constructing module further comprises:
a key attribute sub-module configured for extracting key attributes of each of the entity pairs in the results of pre-segmentation; and according to the extracted key attributes, generating a plurality of new entity pairs by re-segmenting and clustering the entities; and
a first outputting sub-module configured for labeling part of the new entity pairs that randomly selected, to obtain and output the first key sample.

11. The system of claim 9, wherein the second sample constructing module comprises:
a sample sub-module, configured for labeling part of the plurality of entity pairs in the results of pre-segmentation, to form a labeled sample set and an unlabeled sample set comprising those unlabeled;
a modeling sub-module, configured for constructing a classification model based on the labeled sample set;
a calculating sub-module, configured for inputting the unlabeled entity pairs into the classification model for scoring, and according to the results of scoring, extracting the entity pairs with a boundary score;
an iteration sub-module, configured for, according to an active learning algorithm, selecting, as a key sample, part of the entity pairs with the boundary score for labeling, and adding the labeled sample to the labeled sample set to obtain a new labeled sample set based on which the classification model being re-trained; and
a second outputting sub-module configured for, in a case that the classification model converges, determining the labeled sample set obtained by the converged classification model as the second key sample set and outputting the second key sample set.

12. A terminal for normalizing entities in a knowledge base, comprising:
one or more processors; and
a storage device, configured to store one or more programs;
when the one or more programs are executed by the one or more processors, the one or more processors implements the method of any one of claims 1-7.

13. A non-volatile computer readable storage medium having a computer program stored thereon that, when executed by a processor, implements the method of any one of claims 1-7.
